# EUROPEAN PATENT APPLICATION

(11) **EP 4 292 695 A1**
(43) Date of publication of application: **20.12.2023**
(21) Application number: 22305862.9
(22) Date of filing: 13.06.2022
(51) Int. Cl.: B01D 67/00, A41D 13/00, A62B 17/00, B01D 69/12, B01D 71/52, B01D 71/54, B01D 39/08, D01F 6/66

(54) **BREATHABLE PERSONAL PROTECTIVE EQUIPMENT**

(71) Applicant: ARKEMA FRANCE, 92700 Colombes (FR)
(72) Inventor: LYONS, Jason, King of Prussia, 19406-0936 (US); MCDONOUGH, John, Kenneth, King of Prussia, 19406-0936 (US); BARSOTTI, Robert, King of Prussia, 19046-0936 (US)
(74) Representative: Arkema Patent

(57) **Abstract**

The invention deals with a breathable personal protective equipment, which is fire resistant and/or chemically resistant, having at least one membrane comprising a porous polyaryletherketone-based non-woven layer.

## Description

### TECHNICAL FIELD

The present invention concerns porous membranes, which are resistant in extreme environments.

### TECHNICAL BACKGROUND

There is presently a need to provide new components that present heat resistance, flame resistance and/or chemical resistance and are yet porous. For example, fire-fighting equipment or fire-safety equipment need to be resistant to extreme environments but yet present sufficient breathability, and notably good moisture vapour permeability.

It is known from the prior art, for example in US418054, a laminate made of: a first layer of porous expanded polytetrafluoroethylene (ePTFE) and a second layer of ePTFE, both layers being waterproof and yet breathable. They are adhered by a phosphorous-containing poly(urea-urethane) adhesive having, in addition of waterproof and breathable properties, flame-retardant properties. This laminate has the advantage to be cleaned, washed and even scrubbed without removing any of the permanent flame retardant compound, the latter being sandwiched between the two ePTFE layers. Disadvantages of such a laminate are several. The use of multiple materials increases both raw material and process costs- including the extra step of applying and curing an adhesive. The ePTFE laminate structure may lose adhesion over time, resulting in loss of performance and shorter life times. The ePTFE may also suffer from poor abrasion properties again leading to lower performance and shorter life times. In addition, there are increasing restrictions regarding per- and polyfluoroalkyl substances (PFAS).

Therefore, there is a need to provide improved membranes, which do not present some or all of the aforementioned disadvantages.

It is also known from the art, polyaryletherketone films, for example PEKK films, which are resistant to high temperature and chemicals. However, such films do not present permeation properties.

There is thus a need to provide new membranes that have very good heat resistance and chemical resistance, as the polyaryletherketone films have, but without sacrificing moisture vapour permeability.

Particularly, in the field of fire-protective garments, there is a need to provide membranes that can pass the NFPA 1971 tests.

### SUMMARY OF THE INVENTION

The invention deals with a breathable personal protective equipment, which is fire resistant and/or chemically resistant, having at least one membrane comprising a porous polyaryletherketone-based non-woven layer.

Preferably, the porous polyaryletherketone-based non-woven layer comprises polyaryletherketone fibres having a mean diameter comprised between 50 and 5000 nm. More preferably, the porous polyaryletherketone-based non-woven layer comprises polyaryletherketone fibres having a mean diameter comprised between 100 and 2000 nm, and most preferably between 500 and 1000 nm.

Preferably, the polyaryletherketone of the porous polyaryletherketone-based non-woven layer comprises, substantially consists of, or consists of a polyetherketoneketone polymer.

Preferably, the porous polyaryletherketone-based non-woven layer has an average pore size comprised between 200 nm and 4000 nm. More preferably, the porous polyaryletherketone-based non-woven layer has an average pore size comprised between 400 nm and 1000 nm.

Preferably, the porous polyaryletherketone-based non-woven layer has a thickness comprised between 5 and 250 microns. More preferably, the porous polyaryletherketone-based non-woven layer has a thickness comprised between 10 and 100 microns.

In some embodiments, the porous polyaryletherketone-based non-woven layer has a degree of crystallinity comprised between 5% and 35% per weight of polyaryletherketone, and preferably between 10% and 27% per weight of polyaryletherketone.

In some embodiments, the porous polyaryletherketone-based non-woven layer has a degree of crystallinity comprised between 0% and 5% per weight of polyaryletherketone, and preferably between 0.5% and 2% per weight of polyaryletherketone.

In some embodiments, the porous polyaryletherketone-based non-woven layer is obtained by melt-blowing or electro-spinning. Preferably, the porous polyaryletherketone-based non-woven layer is obtained by melt-blowing.

In some embodiments, the membrane comprising the porous polyaryletherketone-based non-woven layer also comprises a polyurethane-based layer.

In some preferred embodiments, the membrane comprising the porous polyaryletherketone-based non-woven layer does not comprise a polyurethane-based layer.

### DESCRIPTION OF EMBODIMENTS

The invention will now be described in more detail without limitation in the following description.

The present invention relates to a breathable personal protective equipment, which is fire and/or chemically resistant. The equipment has at least one membrane comprising a porous PolyArylEtherKetone (PAEK)-based non-woven layer.

A polyaryl ether ketone (PAEK) is a polymer including repeating units having the following formulae:

(-Ar-X-) and (-Ar₁-Y-),

in which:
- Ar and Ar₁ each denote a divalent aromatic radical;
- Ar and Ar₁ may preferably be chosen from 1,3-phenylene, 1,4-phenylene, 1,1'-biphenylene divalent in positions 3,3', 1,1'-biphenyl divalent in positions 3,4', 1,4-naphthylene, 1,5-naphthylene and 2,6-naphthylene;
- X denotes an electron-withdrawing group; it may preferably be chosen from the carbonyl group and the sulfonyl group;
- Y denotes a group chosen from an oxygen atom, a sulphur atom or an alkylene group, such as -(CH₂)- and isopropylidene.

In these units X and Y, at least 50%, preferably at least 70% and more particularly at least 80% of the groups X are a carbonyl group, and at least 50%, preferably at least 70% and more particularly at least 80% of the groups Y represent an oxygen atom.

According to a preferred embodiment, 100% of the X groups may represent a carbonyl group and 100% of the groups Y may represent an oxygen atom.

Advantageously, the PAEK(s) may be chosen from:
- a polyether ketone ketone, also known as PEKK; a PEKK comprises one or more repeat units of formula: -Ph-O-Ph-C(O)-Ph-C(O)-;
- a polyether ether ketone, also known as PEEK; a PEEK comprises one or more repeat units of formula: -Ph-O-Ph-O-Ph-C(O)-;
- a polyether ketone, also known as PEK; a PEK comprises one or more repeat units of formula: -Ph-O-Ph-C(O)-;
- a polyether ether ketone ketone, also known as PEEKK; a PEEKK comprises one or more repeat units of formula: -Ph-O-Ph-O-Ph-C(O)- Ph-C(O)-;
- a polyether ether ether ketone, also known as PEEEK; a PEEEK comprises one or more repeat units of formula: -Ph-O-Ph-O-Ph-O- Ph-C(O)-;
- a polyether diphenyl ether ketone, also known as PEDEK; a PEDEK comprises one or more repeat units of formula: -Ph-O-Ph-Ph-O-Ph-C(O)-;
- and mixtures thereof; and
- copolymers comprising at least two of the abovementioned repeat units,
in which: Ph represents a phenylene group and -C(O)- represents a carbonyl group, each of the phenylenes possibly being, independently, of the ortho (1-2), meta (1-3) or para-(1-4) type, preferentially being of meta or para type.

In addition, defects, end groups and/or monomers may be incorporated in very small amount into the polymers as described in the above list, without, however, having an incidence on their performance.

In the embodiments in which the polymer is a copolymer, it may advantageously be a copolymer of statistical type.

Preferably, the PAEK may be a PEKK and preferably a PEKK essentially consisting of, or consisting of, a terephthalic repeating unit and an isophthalic repeating unit, the terephthalic repeating unit having the formula: 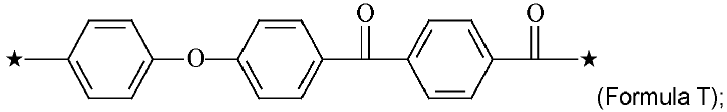 the isophthalic repeating unit having the formula:

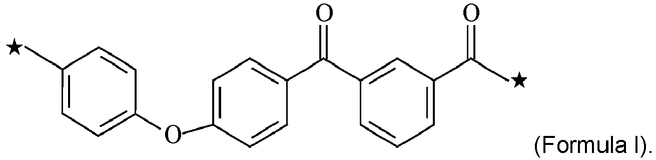

For a polymer of a given family, the term "essentially consisting of repeating unit(s)" means that the repeating unit(s) represent a molar proportion of from 95% to 99.9% in the polymer. In addition, the term "consisting of repeating unit(s)" means that the repeating unit(s) represent a molar proportion of at least 99.9%, ideally of 100%, in the polymer.

The choice of the molar proportion of T units, relative to the sum of the T and I units, is one of the factors which makes it possible to adjust the rate of crystallization of the polyether ketone ketones.

A given molar proportion of T units, relative to the sum of the T and I units, may be obtained by adjusting the respective concentrations of the reagents during the polymerization, in a manner known per se.

The molar proportion of T units relative to the sum of the T and I units of PEKK may notably range from: 0 to 5%; or from 5% to 10%; or from 10% to 15%; or from 15% to 20%; or from 20% to 25%; or from 25% to 30%; or from 30% to 35%; or from 35% to 40%; or from 40% to 45%; or from 45% to 48%; or from 48% to 51%; or from 51% to 54%; or from 54% to 58%; or from 58% to 60%; or from 60% to 62%, or from 62% to 64%; or from 64% to 68%; or from 68% to 72%; or from 72% to 75%; or from 75% to 80%; or from 80% to 85%.

In particular embodiments, the polyetherketoneketone may consist essentially of, or consist of "T" and "I" units, with a molar proportion of T units relative to the sum of the T and I units ranging from: 55% to 85%. The molar proportion of T units relative to the sum of the T and I units may preferably be greater than or equal to 58% and/or less than or equal to 72%.

In some other embodiments, the PAEK may be a polymer consisting essentially of, or even consisting of:
a repeat unit of formula:

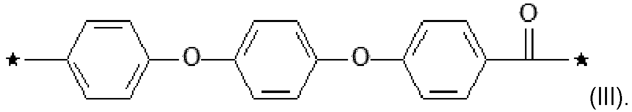

In some other embodiments, the PAEK may be a polymer consisting essentially of, or even consisting of a repeat unit of formula (III) and a repeat unit of formula:

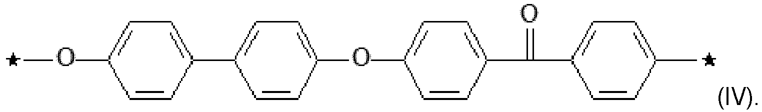

The molar proportion of units (III) relative to the sum of the units (III) and (IV) may range from 0% to 99%. The molar proportion of units (III) relative to the sum of the units (III) and (IV) may preferentially be greater than or equal to 55% and/or less than or equal to 95%, and even more preferentially greater than or equal to 60% and/or less than or equal 85%.

In some other embodiments, the PAEK may be a polymer consisting essentially of, or consisting of a repeat unit of formula (III) and a repeat unit of formula:

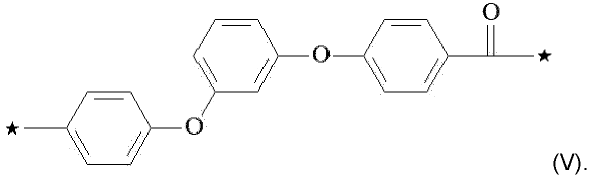

The molar proportion of units (III) relative to the sum of the units (III) and (V) may range from 0% to 99%. The molar proportion of units (III) relative to the sum of the units (III) and (V) may preferentially be greater than or equal to 5% and/or less than or equal to 97%, more preferentially greater than or equal to 40% and/or less than or equal to 96% and even more preferentially greater than or equal to 70% and/or less than or equal 95%.

A nonwoven fabric is generally made of staple fibres (short) and/or long fibres (continuous long), bonded together by chemical, mechanical, heat or solvent treatment.

Preferably, the porous polyaryletherketone-based non-woven layer comprises at least 50% by weight of polyaryletherketone fibres compared to the total weight of the non-woven layer. It may comprise at least 75%, or at least 80%, or at least 85%, by weight of polyaryletherketone fibres to the total weight of the porous polyaryletherketone-based non-woven layer.

In some embodiments, the porous polyaryletherketone-based non-woven layer may essentially consist of polyaryletherketone fibres, meaning that the polyaryletherketone fibres represent 90% or more by weight of the total weight of the non-woven layer.

In some embodiments, the porous polyaryletherketone-based non-woven layer may consist of polyaryletherketone fibres, for example of polyetherketoneketone fibres.

The fibres, notably the polyaryletherketone fibres, have a mean diameter comprised between 50 and 5000 nm, preferably between 100 and 2000 nm, and most preferably between 500 and 1000 nm. The mean diameter is measured by Transmission Electron Microscopy (TEM).

The porous polyaryletherketone-based non-woven layer has preferably an average pore size comprised between 50 nm and 5000 nm, more preferably between 100 nm and 2000 nm, and most preferably between 500 to 1000nm. For example, the average pore size may be comprised between 500 and 600 nm, or between 600 and 700, or between 700 to 800 nm, or between 800 and 900 nm, or between 900 and 1000 nm. The average pore size is measured by either porometry (with gas-liquid porometry being preferred) or electron microscopy. Porometry generally is a preferred method to have a wider view of the entire membrane.

In some embodiments, the porous polyaryletherketone-based non-woven layer may essentially consist of, or consist of, polyaryletherketone fibres, notably PEKK fibres, wherein the fibres have a mean diameter comprised between 50 and 5000 nm, and have an average pore size comprised between 50 nm and 5000 nm. Advantageously, the polyaryletherketone fibres may be PEKK fibres essentially consisting of, or consisting of "T" and "I" units, with a molar proportion of T units relative to the sum of the T and I units ranging from: 55% to 85%.

In some embodiments, the porous polyaryletherketone-based non-woven layer may essentially consist of, or consist of, polyaryletherketone fibres, notably PEKK fibres, wherein the fibres have a mean diameter comprised between 500 and 1000 nm, and have an average pore size comprised between 50 nm and 5000 nm. Advantageously, the polyaryletherketone fibres may be PEKK fibres essentially consisting of, or consisting of: "T" and "I" units, with a molar proportion of T units relative to the sum of the T and I units ranging from: 55% to 85%.

Preferably, the PAEK membrane of the invention have a thickness comprised between 5 and 250 µm, preferably between 10 and 100 µm. For example, the thickness may be between 10 and 20 µm, or between 20 and 30 µm, or between 30 and 40 µm, or between 40 and 50 µm, or between 50 and 60 µm, or between 60 and 70 µm, or between 70 and 80 µm, or between 80 and 90 µm, or between 90 and 100 µm.

The thickness is measured using a micrometre or 'thickness gauge or via cross sectioning the membrane and using optical or electron microscopy.

In some embodiments, the porous polyaryletherketone-based non-woven layer may have a thickness between 10 and 100 µm and have an average pore size comprised between 50 nm and 5000 nm. Advantageously, the polyaryletherketone fibres may be PEKK fibres essentially consisting of, or consisting of "T" and "I" units, with a molar proportion of T units relative to the sum of the T and I units ranging from: 55% to 85%.

The polyaryletherketone-based non-woven layer may be amorphous or semi-crystalline. The degree of crystallinity of the layer may vary in a broad range. Preferably, the degree of crystallinity of the PAEK-based non-woven layer is of 0 to 35%, per weight of polyaryletherketone.

In some embodiments, the degree of crystallinity is less than 5%, or less than 2%, or less than 1%. In these situations, the non-woven layer may be considered amorphous.

In some embodiments, the degree of crystallinity is more than 5%, or more than 10%. In these situations, the non-woven layer may be considered as semi-crystalline.

In some embodiments, the degree of crystallinity may be of 0 to 5%, or of 0.5 to 2%.

In some embodiments, the degree of crystallinity may be of 5% to 35%, or of 10 to 27%.

The degree of crystallinity may be measured by Wide-Angle X-ray Scattering (WAXS) analysis. For example, it may be carried on a Nano-inXider^{®} type device with the following conditions:
- Wavelength: main line Ka1 of copper (1.54 Angstrom).
- Generator power: 50 kV - 0.6 mA.
- Observation mode: transmission.
- Counting time: 10 minutes.

This gives a spectrum of the scattered intensity as a function of the diffraction angle. This spectrum makes it possible to identify the presence of crystals, when peaks are visible on the spectrum in addition to the amorphous halo. In the spectrum, the area of the crystalline peaks (denoted AC) and the area of the amorphous halo (denoted AH) can be measured. The mass proportion of crystalline polymer is then estimated by the ratio (AC)/(AC+AH).

The membrane comprising the porous polyaryletherketone-based non-woven layer, may comprise other layers of different chemical composition.

The membrane may notably comprise a polyurethane-based layer.

Alternatively, or in complement the membrane may comprise a fluorinated polymer, notably PTFE, -based layer.

In some embodiments, the membrane does not comprise any additional polyurethane-based layer or any additional fluorinated polymer, notably PTFE, -based layer.

In some embodiments, the membrane essentially consists of, or consists of a porous polyaryletherketone-based non-woven layer.

The membrane comprising the porous polyaryletherketone-based non-woven layer presents high flame resistance and/or high heat resistance, and/or high thermal resistance, and/or low evaporative resistance.

Advantageously, the porous polyaryletherketone-based non-woven layer, or the membrane thereof, passes the tests of flame resistance, heat resistance, thermal resistance and evaporative resistance as described below.

The membrane may notably present one or more of the following parameters, preferably all the following parameters:
- a minimum total heat loss (THL) of 205 W/m². The THL is measured according to NFPA (1971) point 8.33;
- a shrinkage of less than 10%. The shrinkage is measured according to NFPA (1971) point 8.6;
- a char length of less than 100 mm and an afterflame time of less than 2 seconds. This is measured according to Flame resistance test 1 according to NFPA (1971) point 8.2;
- an evaporative resistance of less than 21 Pa*m²/W. This is measured according to NFPA (1971) point 8.33 / ASTM F1868;
- good resistance towards caustic / high pH solvents.

The porous polyaryletherketone-based non-woven layer may be obtained by any method known by the skilled person and preferably by any method to make a non-woven fabric. The method to manufacture the porous polyaryletherketone-based non-woven layer may preferably be chosen among a melt-blowing process or an electro-spinning process, and most preferably a melt-blowing process.

The membrane comprising the porous polyaryletherketone-based non-woven layer is part of a breathable personal protective equipment, which is fire resistant and/or chemically resistant. A non-limitative list of such equipment is fire-fighting equipment, fire-safety equipment, spacesuit or labcoats.

## Claims

1. Breathable personal protective equipment, which is fire resistant and/or chemically resistant, having at least one membrane comprising a porous polyaryletherketone-based non-woven layer.

2. Breathable personal protective equipment according to claim 1, wherein the porous polyaryletherketone-based non-woven layer comprises polyaryletherketone fibres having a mean diameter comprised between 50 and 5000 nm, preferably between 100 and 2000 nm, and most preferably between 500 and 1000 nm.

3. Breathable personal protective equipment according to any one of claims 1 and 2, wherein the polyaryletherketone of the porous polyaryletherketone-based non-woven layer comprises, substantially consists of, or consists of: polyetherketoneketone polymer.

4. Breathable personal protective equipment according to any one of claims 1 to 3, wherein the porous polyaryletherketone-based non-woven layer has an average pore size comprised between 200 nm and 4000 nm, and preferably between 400 nm and 1000 nm.

5. Breathable personal protective equipment according to any one of claims 1 to 4, wherein the porous polyaryletherketone-based non-woven layer has a thickness comprised between 5 and 250 microns, preferably between 10 and 100 microns.

6. Breathable personal protective equipment according to any one of claims 1 to 5, wherein the porous polyaryletherketone-based non-woven layer has a degree of crystallinity comprised between 5% and 35% per weight of polyaryletherketone, and preferably between 10% and 27% per weight of polyaryletherketone.

7. Breathable personal protective equipment according to any one of claims 1 to 6, wherein the porous polyaryletherketone-based non-woven layer has a degree of crystallinity comprised between 0% and 5% per weight of polyaryletherketone, and preferably between 0,5% and 2% per weight of polyaryletherketone.

8. Breathable personal protective equipment according to any one of claims 1 to 7, wherein the porous polyaryletherketone-based non-woven layer is obtained by melt-blowing or electro-spinning, preferably by melt-blowing.

9. Breathable personal protective equipment according to any one of claims 1 to 8, wherein the membrane comprising the porous polyaryletherketone-based non-woven layer also comprises a polyurethane-based layer.

10. Breathable personal protective equipment according to any one of claims 1 to 9, wherein the membrane comprising the porous polyaryletherketone-based non-woven layer does not comprise a polyurethane-based layer.
